Europäisches Patentamt

European Patent Office

Office européen des brevets

(11) Numéro de publication: **0 132 207**
**A2**

## (12) DEMANDE DE BREVET EUROPEEN

(21) Numéro de dépôt: **84401529.7**

(22) Date de dépôt: **19.07.84**

(51) Int. Cl.⁴: **A 01 C 7/06**

(30) Priorité: **19.07.83 FR 8312120**

(43) Date de publication de la demande:
**23.01.85 Bulletin 85/4**

(84) Etats contractants désignés:
**DE GB IT NL**

(71) Demandeur: **Chauvin, Marcel**
**93, rue de la Haluchère**
**F-44300 Nantes(FR)**

(71) Demandeur: **Parois, Pierre**
**Villa Avel Dro Allée Roch-Loued**
**F-44510 Le Pouliguen(FR)**

(72) Inventeur: **Chauvin, Marcel**
**93, rue de la Haluchère**
**F-44300 Nantes(FR)**

(72) Inventeur: **Parois, Pierre**
**Villa Avel Dro Allée Roch-Loued**
**F-44510 Le Pouliguen(FR)**

(74) Mandataire: **Phélip, Bruno et al,**
**c/o Cabinet Harlé & Phélip 21, rue de la Rochefoucauld**
**F-75009 Paris(FR)**

(54) **Nouvel élément de semoir de précision pour cultures spécialisées telles que cultures maraîchères, légumières de plein champ ou en pépinières.**

(57) Elément de semoir pneumatique permettant de réaliser une grande précision et une parfaite régularité de semi.

Il est caractérisé en ce qu'il comporte un dispositif agitateur 37, coopérant avec l'entrée d'un couloir de circulation de graines 25 du réservoir pour créer une turbulence provoquant une remontée des graines, légèrement au-dessus de la lumière 23 d'entrée des graines dans le réservoir suivie d'une retombée verticale de celles-ci au cours de laquelle elles sont prises en charge par les perforations du disque 3, lesquelles disposées en ligne sur un même rayon d'une rangée à l'autre sont larguées en partie basse de l'élément sous l'action de mises à l'atmosphère décalées dans les saignées de mise en dépression de la valeur une fois et demie l'intervalle séparant deux perforations consécutives du disque. L'entrée du couloir de circulation 25 comporte un bossage axial 28 de forme ovoïde coopérant avec un chanfrein arrondi 29 formant lèvre situé à l'extrémité de la cloison 21 et avec un bossage 30 réalisant une déformation de la paroi extérieure du couloir.

Fig.1

EP 0 132 207 A2

**Nouvel élément de semoir de précision pour cultures spécialisées telles que cultures maraicheres, légumières de plein champ ou en pépinières**

La présente invention concerne un élément de semoir destiné à l'agriculture et plus particulièrement aux cultures spécialisées notamment les cultures maraichères, les cultures légumières de plein champ ainsi que les cultures en pépinières, pour lesquelles il est recherché une grande précision et une parfaite régularité des semis.

Ces exigences sont dictées d'une part en raison du prix même des graines dû aux techniques de sélection, de préparation et de calibrage de celles-ci et d'autre part en prévision des différentes phases d'intervention à effectuer sur les aires ensemencées au fur et à mesure de la germination et du développement des cultures jusqu'à la phase finale de la récolte. C'est ainsi que la précision de la quantité de graines au mètre carré, par exemple, et notamment pour des carottes, permettra d'éviter l'opération longue et fastidieuse consistant à éclaircir la planche de culture par enlèvement des pousses excédentaires, lequel enlèvement provoque immanquablement l'ébranlement des pousses environnantes. La régularité du pas d'ensemencement a été motivée par la mécanisation et l'automatisation de plus en plus poussée du ramassage du produit lorsqu'il a atteint sa maturité.

Les dispositifs actuellement utilisés pour atteindre ce but sont communément dénommés semoirs à dépression, en raison de la dépression créée à l'intérieur d'une cavité circulaire contre laquelle glisse en rotation un disque portant une ligne circulaire de perforations assurant chacune la prise en charge et le supportage d'une graine jusqu'au largage de celle-ci par

D A. 7627 EU.

2

rupture de la dépression. D'une façon générale,les éléments de semoirs montés en parallèle sur un châssis sont constitués chacun:

-d'un réservoir à graines comportant des parois fixes et une paroi mobile,constituée par le disque portant les perforations ainsi qu'une trémie d'arrivée des graines,

-d'un disque perforé,

-d'un plateau fixe portant la cavité dans laquelle est créée la dépression nécessaire au maintien des graines sur le disque,ainsi que les moyens de mise en dépression de ladite cavité,

-d'un dispositif d'élimination de graines excédentaires ou sélecteur pouvant se trouver sur le disque de façon à ne laisser subsister qu'une seule graine par trou.

Les appareils connus de ce genre ne comportant qu'une seule ligne circulaire de perforations sont limités en possibilité et ne peuvent permettre d'obtenir une densité importante de graines dans le rang de semis.

L'invention vise à obtenir un semoir à vitesse d'avancement rapide en raison du temps souvent très court pendant lequel les semis doivent être réalisés et de l'étendue de plus en plus grande des surfaces à ensemencer,lequel semoir permet d'atteindre une haute précision du nombre de graines semées au mètre linéaire ainsi qu'une grande précision des distances entre graines au sol,la dépose des graines au sol pouvant s'effectuer soit sur une seule ligne,soit sur deux lignes selon un pas de dépose serré,en position décalée d'un demi-pas d'une ligne à l'autre.

L'élément de semoir,objet de l'invention ,comporte sur le disque deux lignes circulaires concentriques de perforations en regard de deux saignées

3

circulaires usinées dans le plateau fixe de l'élément, lesquelles saignées sont interrompues sur une fraction angulaire de leur circonférence par une plaque d'obturation afin d'annuler l'effet d'aspiration dans cette fraction laquelle se situe en face l'arrivée dans le réservoir des graines en provenance de la trémie de stockage à travers une lumière exécutée dans le flasque dudit réservoir. Dans cette zone du réservoir, s'effectue le brassage des graines à l'aide d'un dispositif agitateur provoquant le foisonnement de celles-ci et leur remontée à quelques millimètres au-dessus de ladite lumière, suivie de leur retombée au cours de laquelle certaines d'entre elles sont aspirées vers les trous par la dépression créée dans les deux saignées. Le dispositif agitateur est formé d'un flasque circulaire lié en rotation avec le disque support de graines; il est logé dans la partie centrale du réservoir de l'élément constituant l'enceinte de brassage délimitée périphériquement par une cloison de forme circulaire se prolongeant en partie basse par une portion de droite horizontale, la partie circulaire étant interrompue dans la zone d'arrivée des graines, sur une portion d'arc correspondant à environ 65°, ainsi qu'en partie haute sur une portion d'arc correspondant à environ 90°, cette dernière interruption étant toutefois jalonnée par des pions cylindriques disposés circulairement à intervalles réguliers de façon telle que leur génératrice la plus proche du centre du semoir soit en prolongement de la paroi intérieure de la cloison circulaire. A la périphérie du flasque constituant le dispositif agitateur sont implantés des doigts souples rayonnants dont l'extrémité se situe à une distance du centre nettement supérieure au rayon de la partie circulaire de la cloison. Une telle disposition place les doigts en position recourbée vers l'arrière par rapport au sens

4

de rotation de l'agitateur, leur extrémité libre étant en appui sur la paroi interne de ladite partie circulaire pour reprendre sensiblement la position détendue uniquement à l'extrémité de la partie droite horizontale de la cloison dans la zone d'arrivée des graines. La longueur des doigts de l'agitateur et l'écartement des pions jalonnant la partie interrompue supérieure de la partie circulaire de la cloison sont déterminés de façon à permettre le retour en partie basse du réservoir, des graines excédentaires éliminées du disque par le dispositif sélecteur. La face interne du flasque du réservoir comporte une face de jointoiement périphérique formant bride dans le plan de laquelle se situe le sommet de la cloison de l'enceinte de brassage, cette dernière se raccordant par sa partie droite sur ladite face de jointoiement. Entre la partie circulaire de la cloison et la face de jointoiement se situe un couloir dont la section droite permet une libre circulation des graines retenues sur le disque au cours de la rotation de celui-ci. Le fond de ce couloir se situe dans un plan décalé par rapport au plan de la partie centrale de l'enceinte de brassage, limité à la surface du cercle, de diamètre correspondant au diamètre intérieur de ladite partie centrale, c'est-à-dire au diamètre intérieur de la cloison circulaire; ces deux plans décalés se raccordent par un embrèvement oblique, de largeur sensiblement égale à l'épaisseur de la cloison, sauf dans la zone de la lumière d'arrivée des graines dans le réservoir, où l'embrèvement vient aboutir sur la bordure même de ladite lumière; afin de faciliter l'accès au réservoir des graines en provenance de la trémie, les deux arêtes supérieures de la lumière sont biseautées côté face externe du réservoir. Chaque doigt du dispositif agitateur pousse devant lui une certaine quantité de graines pour les amener au-dessus de la lumière d'accès au réservoir, en-dessous de l'entrée du couloir de circulation. Cette entrée comporte à l'extrémité de la cloison circulaire constituant la paroi intérieure du couloir un chanfrein arrondi formant lèvre,ainsi qu'un bossage sur la paroi extérieure dudit couloir. Dans l'axe de l'entrée ainsi constituée se situe un bossage de forme ovoïde coopérant avec le bossage de la paroi extérieure pour réaliser la zone de brassage proprement dite,les graines propulsées par l'agitateur venant amortir et redresser leur trajectoire sur l'arrondi du bossage de ladite paroi.Le doigt venu en contact avec la lèvre de la cloison s'efface rapidement, l'attaque de la lèvre sur le doigt s'effectuant tout près de l'implantation de celui-ci dans le flasque; cet effacement rapide provoque une turbulence des graines, suivie d'une retombée verticale de celles-ci au cours de laquelle elles sont prises en charge par les perforations du disque. Dans l'axe du couloir de circulation des graines et sur l'axe vertical du réservoir est disposé un dispositif sélecteur en forme de disque orientable portant deux groupes de dents se répartissant chacun de part et d'autre de la trajectoire des trous du disque,les profils des dents du même groupe coopérant pour éliminer les graines excédentaires et placer la graine devant seule rester sur chaque trou en position bien centrée sur celui-ci,l'orientation du disque permettant d'adapter le sélecteur à la grosseur des graines à semer. L'ensemble plateau fixe et réservoir peut comporter un capot en plexiglass s'étendant depuis la sortie du couloir du réservoir jusqu'en partie basse de l'élément dans la zone de largage des graines et permettant un contrôle visuel d'environ 80°,du bon fonctionnement de l'appareil. Le réservoir comporte une série d'orifices d'entrée d'air afin de réaliser,entre ceux-ci et les orifices

6

d'aspiration situés dans chacune des saignées concentriques usinées dans le plateau fixe un circuit court d' air en provenance de l'extérieur,de façon à ne pas perturber en fin de cycle l'opération de largage des graines. Ces deux saignées portent également chacune à leur extrémité aboutissant à la plaque d'obturation,un orifice de mise à l'air annulant la dépression régnant dans ces saignées, afin de libérer chaque graine à l'aplomb d'une tubulure de mise au sol. En face de chacun de ces orifices de mise à l'air et de l'autre côté du disque est prévu un râcleur en téflon disposé obliquement par rapport à la trajectoire des graines,lequel râcleur fait en même temps office de déflecteur pour orienter la trajectoire des graines vers le sol. Les deux orifices de mise à l'air sont espacés angulairement de la valeur d'une fois et demie l'intervalle séparant les trous de l'une ou l'autre des rangées de trous du disque,lesquels trous pour des raisons de facilité d'usinage sont disposés en regard les uns des autres sur un même rayon d'une rangée à l'autre. Une telle disposition permet de réaliser soit un semis sur une même ligne selon un pas très serré sans avoir pour autant des intervalles trop serrés sur chaque ligne circulaire de perforations du disque,soit un semis sur deux lignés parallèles,les graines étant semées en quinconce d'une rangée à l'autre. Chaque mise à l'air est constituée par un embout cylindrique logé dans le chambrage d'une tubulure de mise en communication avec l'atmosphère. Le corps de cet embout porte un joint torique d'étanchéité sur son cylindre extérieur et à son extrémité un cylindrage en téflon dont l'alésage réalise une lèvre circulaire réalisant un portage étanche sur le disque,les pressions de contact étant assurées à l'aide d'un ressort de compression agissant à l'arrière du corps. La plaque d'obturation annulant l'effet d'aspiration sur une fraction angulaire des saignées comporte un orifice débouchant dans un chambrage sensiblement carré,à cheval sur les deux cercles de perforations du disque,et destiné à permettre un nettoyage de celles-ci par soufflage d'air sous pression. Afin d'éviter l'effet de cheminée dans la tubulure de mise au sol,créant une turbulence ascensionnelle des graines après leur largage,notamment dans le cas d'un ensemble plateau-réservoir-capot, cet effet étant provoqué par la dépression régnant dans les saignées en amont du point de largage,il est prévu une arrivée d'air dans le capot à environ 30° en amont des mises à l'atmosphère des trous dans la zone de largage.

Les dessins annexés illustrent un mode de réalisation d'un élément de semoir de précision conforme à la présente invention. Ceux-ci représentent:

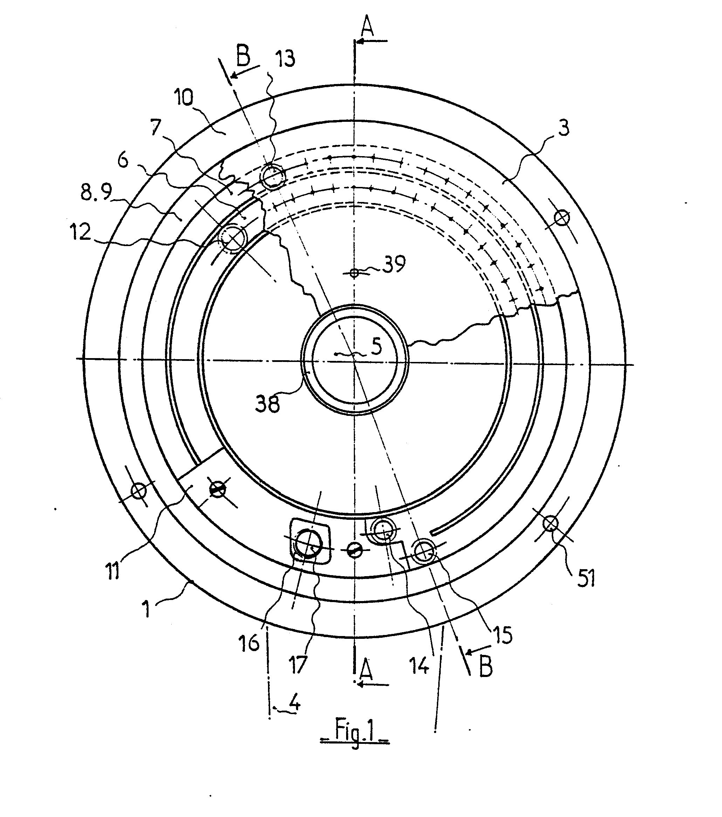

-en figure 1,une vue de face, du côté intérieur du plateau fixe avec une représentation fragmentée du disque,

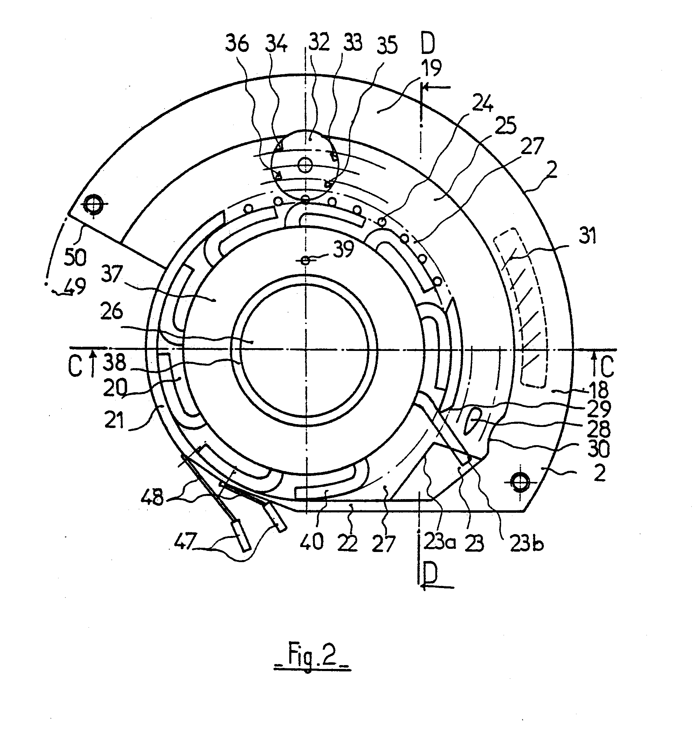

-en figure 2,une vue de face, du côté intérieur, du réservoir équipé des dispositifs agitateur et sélecteur,

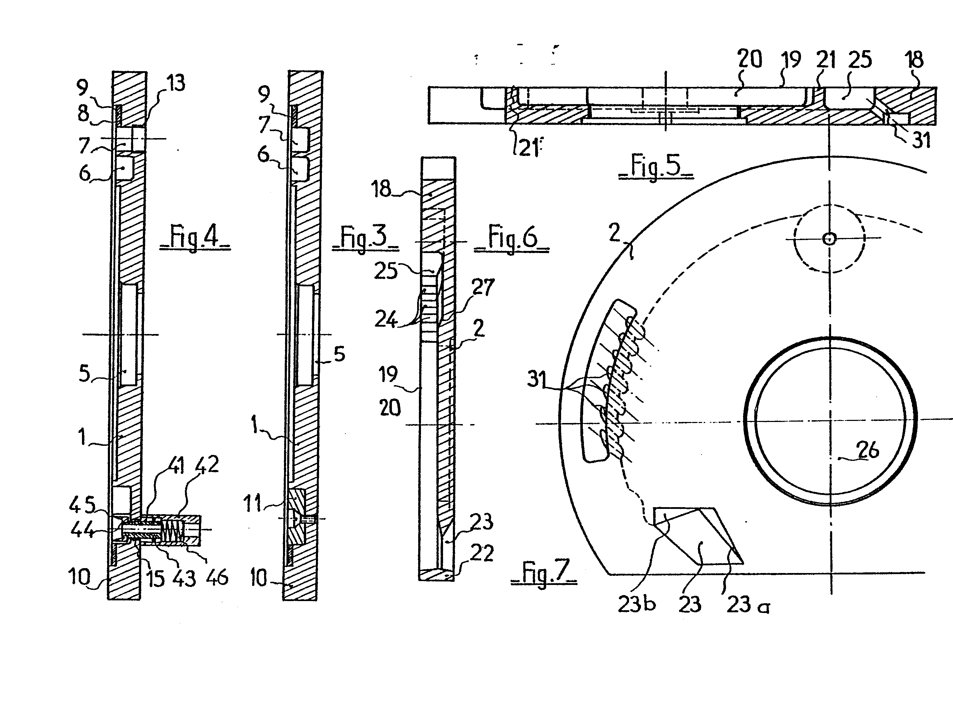

-en figure 3,une coupe suivant AA du plateau fixe,

-en figure 4,une coupe suivant BB du plateau fixe,

-en figure 5,une coupe suivant CC du réservoir,

-en figure 6,une coupe suivant DD du réservoir,

-en figure 7,une vue de face du côté extérieur du réservoir.

Tel que représenté,un élément de semoir selon l'invention ,est principalement composé d'un plateau fixe 1,d'un réservoir 2,d'un disque 3 et d'une tubulure de mise au sol 4. Selon la figure 1,le plateau

fixe 1 est constitué d'un flasque circulaire réalisé en un matériau inoxydable tel que le duralumin par exemple; il comporte en son centre un alésage 5 muni d'un dispositif d'étanchéité dans lequel s'ajuste un arbre creux d'entraînement du disque 3 et du dispositif agitateur. Partant du centre vers la périphérie,le plateau porte deux usinages concentriques 6 et 7 en forme de saignée de section droite carrée ou rectangulaire,ainsi qu'une portée de joint 9 destinée à recevoir un joint 9 en matériau autolubrifiant ou de bonne qualité frottante tel que le téflon,le graphite, métal fritté par exemple,sur lequel joint tourne à frottement doux le disque 3. La portée de joint est bordée extérieurement par une couronne extérieure 10 ou plan d'assemblage avec le réservoir 2. Les saignées 6 et 7 sont obturées sur une fraction angulaire de leur circonférence en partie basse du plateau,d'une valeur sensiblement égale à 70° par une plaque d'obturation 11 en matériau auto-lubrifiant,en ertalon par exemple; cette plaque a pour but d'annuler dans cette zone,l'effet d'aspiration créé dans chaque saignée par deux orifices 12 et 13 reliant le fond des saignées à un dispositif de mise en dépression. Ces deux orifices situés approximativement à 45° au-dessus de l'axe horizontal du semoir sont légèrement décalés angulairement l'un par rapport à l'autre, afin de permettre leur liaison individuelle avec le dispositif de mise en dépression ou leur connexion à l'aide d'une tubulure collectrice en liaison avec ledit dispositif. Les saignées 12 et 13 aboutissent à la plaque d'obturation 11 et comportent respectivement à leur extrémité des orifices de mise à l'atmosphère 14 et 15 décalés angulairement de la valeur d'un intervalle et demi séparant les perforations du disque. La plaque d'obturation porte à peu près à mi-longueur un chambrage 16 sensiblement carré de largeur suffisante pour agir simultanément sur les deux cercles de perforations pour effectuer le nettoyage de celles-ci à l'aide d'un flux d'air sous pression injecté dans le chambrage par un orifice d'admission 17.

Tel que représenté en figure 2, le réservoir 2 est constitué d'un flasque en forme de volute dont la partie circulaire extérieure réalise une bride 18 dont la face interne 19 constitue le plan d'assemblage avec le plateau fixe 1. Cette bride limitée sensiblement à un demi-cercle se raccorde tangentiellement à une partie centrale circulaire 20 bordée par une cloison 21 par l'intermédiaire d'une partie droite horizontale 22, la face supérieure desquelles est contenue dans le plan de la face interne 19 de la bride. Dans l'angle formé par la bride 18 et la partie horizontale de raccordement 22 est prévue la lumière 23 d'arrivée des graines. Face à cette arrivée la cloison 21 est interrompue sur une fraction angulaire d'environ 65°, ainsi qu'en partie haute sur une portion d'arc d'environ 90° ; cette dernière interruption est jalonnée par des pions cylindriques 24 répartis à intervalles réguliers en ligne circulaire tangentiellement au diamètre intérieur de la cloison 21. Entre cette cloison et la bride 18 se situe une saignée 25 formant couloir dont la section droite permet le passage des graines retenues sur le disque 3 en rotation. La partie centrale 20 du réservoir porte un alésage 26 ; elle est située dans un plan vertical décalé par rapport au plan contenant le fond du couloir 25, le raccordement entre ces plans s'effectuant par l'intermédiaire d'un embrèvement oblique 27.Les bords supérieurs 23a et 23b de la lumière 23 sont biseautés côté face externe du réservoir, afin de permettre en conjugaison avec l'embrèvement 27 un accès plus facile des graines dans le réservoir. L'entrée du couloir 25 comporte dans son axe un bossage 28 de forme ovoïde coopérant avec un chanfrein arrondi 29 formant lèvre,situé à l'extrémité de la portion de cloison subsistant entre les deux zones d'interruption de celle-ci et avec un bossage 30 réalisant une déformation de la paroi extérieure du couloir pour créer un brassage par turbulence des graines en amont de l'entrée du couloir,celles-ci étant prises en charge au cours de leur retombée verticale après éclipsage rapide de chaque doigt du dispositif agitateur. En amont de la zone d'aspiration par les orifices 12 et 13,il est prévu sur le réservoir une série d'orifices 31 permettant une admission d'air extérieur dans l'élément de semoir,selon un cycle court,afin de ne pas contrarier le largage des graines en fin de cycle. Sur l'axe vertical du réservoir et sensiblement dans l'axe du couloir 25 est placé le dispositif sélecteur composé d'un disque orientable 32 équipé de deux groupes de dents 33,34 et 35,36,les dents de chaque groupe étant situées l'une 33 ou 35 à l'intérieur du cercle axial des perforations correspondantes du disque,l'autre 34 ou 36 étant située à l'extérieur du cercle axial des perforations correspondantes. Le profil oblique des dents 33 et 35 en forme de rampe ascendante joue un rôle de déflecteur forçant les graines à s'aligner correctement sur le cercle axial, les dents 34 et 36 de profil légèrement incliné vers l'arrière par rapport au plan frontal jouent le rôle de râcleur pour éliminer les graines excédentaires. Le dispositif sélecteur est réglé en fonction du

11

calibre et de la forme des graines par rotation
du plateau circulaire à l'aide d'un bouton moleté
muni d'un index se déplaçant devant un secteur gradué.

Le dispositif agitateur est constitué d'un flasque circulaire 37,fixé sur un arbre creux 38 tourillonnant dans les alésages 5 du plateau fixe 1 et
26 du réservoir 2;il porte sur l'un de ses flancs
un ou plusieurs pions 39 d'entraînement en rotation
du disque 3. Sur sa périphérie et à intervalles réguliers sont implantés d'une façon rayonnante des
doigts 40,en matériau souple tel que le caoutchouc
armé ou non d'une âme métallique. La longueur de
ces doigts est telle que ceux-ci se trouvent en
position recourbée vers l'arrière au cours de la
rotation de l'agitateur,leur extrémité frottant sur
la paroi interne de la cloison 21,ainsi que sur
les pions 24 jalonnant la découpure supérieure de
celle-ci;les doigts ne se trouvent en position sensiblement détendue que dans la zone d'arrivée des
graines par la lumière 23. D'autre part, la longueur
des doigts est telle qu'elle permette le retour
des graines excédentaires éliminées par le sélecteur vers la base du réservoir entre les pions 24.

Chaque orifice de mise à l'air 14 et 15 est
équipé d'un embout cylindrique 41,logé dans le
chambrage de la tubulure de mise à l'atmosphère 42
et s'ajustant de façon glissante dans celui-ci
avec interposition d'un joint torique d'étanchéité
43. L'embout porte à son extrémité située dans
l'une des saignées 6 ou 7 un cylindrage 44
en téflon ou en tout autre matériau de bonne qualité frottante. Ce cylindrage 44 est alésé de façon
à limiter la surface de contact avec le disque 3

12

à une seule lèvre circulaire 45 de façon à réaliser une parfaite étanchéité sur le disque par des pressions de contact engendrées par l'action d'un ressort de compression 46 logé dans le fond du chambrage de la tubulure 42.

· En face de chaque orifice de mise à l'atmosphère et sur la face opposée du disque est disposé un râcleur 47 en téflon ou tout autre matériau de mêmes caractéristiques porté par l'extrémité d'une épingle 48 en corde à piano par exemple fixée sur la paroi extérieure de la cloison 21. Par sa position oblique par rapport à la trajectoire des graines, chaque râcleur joue le rôle de déflecteur orientant ladite trajectoire vers la tubulure de mise au sol 4.

A l'ensemble plateau fixe-réservoir, il peut être associé un capot 49 complétant l'encombrement circulaire extérieur du réservoir et comportant une partie transparente en plexiglass par exemple s'é- tendant de l'arête rayonnante 50 dudit réservoir jusqu'en amont du chambrage 16 de façon à s'assurer de la présence régulière des graines sur les perforations du disque.

L'arrivée d'air permettant d'annuler l'effet de cheminée à l'entrée de la tubulure de mise au sol 4, s'effectue à travers un orifice 51 situé sur le plateau fixe légèrement en amont des points de largage; cette arrivée d'air évite d'autre part l'encrassement du capot 49 pouvant se produire par la remontée de la poussière. La tubulure de mise au sol 4 possède deux canaux en ligne dans le plan vertical du semis ou en parallèle dans le plan frontal.

L'invention ne se limite pas au mode de réalisation spécialement décrit; elle couvre toutes les variantes possibles à condition que celles-ci ne soient pas en contradiction avec l'objet de chacune

13

des revendications annexées à la présente description.

L'élément de semoir,objet de l'invention,peut être utilisé pour le semis de précision de toutes graines allant, par exemple,de la graine d'épinard d'hiver de calibre 6 mm, à la graine de céleri-rave de calibre 0 ,7 mm en passant entre autre par la graine de betterave rouge de calibre 5 mm.

14

## REVENDICATIONS

1. Elément de semoir pneumatique,destiné à réaliser un semis de grande précision et d'une parfaite régularité,plus particulièrement en cultures spécialisées, telles que les cultures maraichères,les cultures légumières de plein champ et les cultures en pépinières,du type distributeur à dépression comportant:

-un réservoir à graines constitué de parois fixes sur l'une desquelles est fixée une trémie d'arrivée de graines et une paroi mobile constituée par un disque muni de perforations,

-un plateau fixe portant au moins une cavité dans laquelle est créée la dépression nécessaire au maintien des graines sur le disque ainsi que les moyens de mise en dépression,

-un dispositif d'élimination des graines excédentaires, du type sélecteur,permettant de ne laisser qu'une graine par perforation,

-un capot complétant l'encombrement extérieur du réservoir et muni d'une partie transparente permettant un contrôle de présence des graines sur les perforations du disque, associé à l'ensemble plateau fixe-réservoir ,
caractérisé en ce que:

-le réservoir 2 comporte en sa partie centrale un dispositif agitateur 37 dont l'action s'exerce dans la zone d'arrivée des graines en provenance de la trémie pour créer en conjugaison avec l'entrée du couloir 25 de circulation des graines fixées sur le disque 3 en rotation une turbulence dans cette zone provoquant une remontée des graines légèrement au-dessus de la lumière d'entrée 23 dans le réservoir,suivie d'une retombée verticale de celles-ci au cours de laquelle,elles sont prises en charge par le disque en amont de l'entrée du couloir,

-le plateau fixe 1 comporte autant de saignées circulaires maintenues en dépression qu'il y a de cercles de perforations sur le disque, chacune desquelles comportant une prise d'aspiration et une mise à la pression atmosphérique,

-chaque saignée est interrompue sur une fraction de sa circonférence afin d'éliminer l'effet d'aspiration dans la zone d'arrivée des graines,

-la position des orifices de mise à la pression atmosphérique sur le plateau coopère avec la disposition des perforations sur le disque pour réaliser soit un semis en ligne très serré,soit un semis sur deux lignes,

-le dispositif sélecteur centre les graines sur chacune des perforations du disque et élimine les graines excédentaires,lesquelles font retour à la zone de brassage

-un dispositif évite la remontée des graines après leur largage et de toute poussière en provenance du sol.

2.Elément de semoir selon la revendication 1,caractérisé en ce que le réservoir 2 est constitué d'un flasque en forme de volute dont la partie circulaire extérieure réalise une bride 18 dont la face interne 19 constitue le plan d'assemblage avec le plateau fixe 1,laquelle bride limitée sensiblement à un demi-cercle se raccorde tangentiellement à une partie centrale 20 bordée par une cloison circulaire 21 par l'intermédiaire d'une partie droite horizontale 22,la face supérieure desquelles est contenue dans le plan de la face interne 19 de la bride,l'accès des graines au réservoir s'effec-

16

tuant à travers une lumière d'arrivée 23 située dans l'angle formé par la bride 18 et la partie horizontale de raccordement 22,ladite cloison 21 étant interrompue face à la lumière d'arrivée des graines,sur une fraction angulaire d'environ 65° ainsi qu'en partie haute sur une portion d'arc d'environ 90°,cette dernière interruption étant jalonnée par des pions cylindriques 24 répartis à intervalles réguliers en ligne circulaire tangentiellement au diamètre intérieur de la cloison 21.

3.. Elément de semoir selon les revendications 1 et 2,prises ensemble,caractérisé en ce que le réservoir 2 comporte entre la cloison circulaire 21 et la bride 18 une saignée 25 formant couloir dont la section droite permet le passage des graines retenues sur le disque 3 en rotation,l'entrée duquel couloir situé à proximité et au-dessus de la lumière d'entrée 23 des graines dans le réservoir comporte dans son axe un bossage 28 de forme ovoïde coopérant avec un chanfrein arrondi 29 formant lèvre,situé à l'extrémité de la portion de cloison circulaire 21 subsistant entre les deux zones d'interruption de celle-ci et avec un bossage 30 constituant une déformation de la paroi extérieure du couloir pour créer un brassage par turbulence en amont de l'entrée du couloir,les graines propulsées par l'agitateur venant amortir et redresser leur trajectoire sur l'arrondi du bossage 30, pour retomber à la verticale.

4.Elément de semoir selon les revendications 1, 2 et 3, prises ensemble,caractérisé en ce que le dispositif sélecteur assurant la prise en charge d'une seule graine par chaque perforation du disque 3 est constitué d'un disque 32 orientable autour d'un axe placé sur l'axe vertical du réservoir et sensiblement dans l'axe du
couloir 25,lequel disque est équipé de deux groupes de dents 33,34 et 35,36,les dents de chaque
groupe étant situées l'une 33 ou 35 à l'intérieur
du cercle axial des perforations correspondantes
du disque 3 ,l'autre 34 ou 36 étant située à
l'extérieur du cercle axial des perforations correspondantes,le profil oblique en forme de rampe
ascendante des dents 33 et 35 entrant les premières
en action par rapport au sens de défilement
des graines portées par le disque, leur assurent un
rôle de déflecteur forçant les graines à s'aligner
correctement sur le cercle axial,les dents 34 et
36 situées en aval des précédentes et de profil
légèrement incliné vers l'arrière par rapport au
plan frontal,jouant le rôle de râcleur afin d'éliminer les graines excédentaires.

5. Elément de semoir selon les revendications 1, 2, 3 et 4,prises ensemble, caractérisé
en ce que la paroi de la partie centrale 20 et le
fond de la saignée 25 formant couloir du réservoir
sont situés dans des plans frontaux décalés,le
raccordement entre les deux plans s'effectuant par
l'intermédiaire d'un embrèvement oblique 27 de largeur sensiblement égale à l'épaisseur de la cloison circulaire 21 sauf dans la zone d'arrivée des
graines dans le réservoir où l'embrèvement vient
aboutir sur la bordure même de la lumière d'arrivée
23.

6.Elément de semoir selon les revendications 1, 2 , 3, 4, 5, prises ensemble,caractérisé en ce que les deux arêtes supérieures 23a et
23b de la lumière d'arrivée des graines dans le
réservoir sont biseautées côté face externe du réservoir et coopèrent avec l'embrèvement oblique 27 bordant l'arête 23a sur l'autre face pour faciliter l'introduction des graines dans le réservoir.

7.Elément de semoir selon la revendication 1,caractérisé en ce que le plateau fixe 1 comporte au moins deux saignées circulaires 6 et 7 portant chacune respectivement une prise d'aspiration 12 et 13 situées sensiblement à 45° au-dessus de l'axe horizontal,ainsi qu'une mise à la pression atmosphérique 14 et 15 située en partie basse du plateau,lesquelles saignées sont interrompues dans la même zone sur une fraction de leur circonférence d'une valeur angulaire sensiblement égale à 70° par une plaque d'obturation 11 en matériau auto-lubrifiant,destinée à éliminer dans cette zone l'effet d'aspiration créé dans chaque saignée par les orifices 12 et 13 ,reliant le fond des saignées à un dispositif de mise en dépression.

8.Elément de semoir selon les revendications 1 et 7,caractérisé en ce que la plaque d'obturation 11 permettant d'éliminer l'effet d'aspiration dans les saignées 6 et 7 du plateau fixe en partie basse de celui-ci,comporte à peu près à mi-longueur un chambrage 16 sensiblement carré de largeur suffisante pour simultanément agir sur les deux cercles de perforations du disque pour réaliser le nettoyage de celles-ci à l'aide d'un flux d'air sous pression injecté dans ledit chambrage par un orifice d'admission 17.

9.Elément de semoir selon les revendications 1, 7 et 8,caractérisé en ce que les orifices de mise à la pression atmosphérique 14 et 15 des saignées 6 et 7 sont décalés angulairement de la valeur d'un intervalle et demi séparant les perforations d'une même ligne circulaire du plateau 3,lesquelles perforations sont disposées d'une rangée à l'autre, en regard les unes des autres sur un même rayon,une telle disposition permettant de réaliser soit un semis sur une même ligne selon un pas serré,sans avoir pour autant des intervalles très serrés sur chaque ligne circulaire de perforations du disque,soit un semis sur deux lignes parallèles les graines étant semées en quinconce d'une ligne à l'autre.

10.Elément de semoir selon l'ensemble des revendications 1 à 9, caractérisé en ce que le réservoir 2 comporte une série d'orifices 31 permettant une admission d'air extérieur en amont des orifices d'aspiration 12 et 13,de manière à créer entre ces orifices 31 et 12,13 un circuit court de l'air,de l'extérieur vers l'intérieur dans la zone de prise en charge des graines par les perforations du disque.

11.Elément de semoir selon l'ensemble des revendications 1 à 10,caractérisé en ce qu'il comporte un orifice d'amenée d'air 51 situé sur le plateau fixe 1 et débouchant dans la chambre constitué par le capot 49 associé à l'ensemble plateau fixe réservoir légèrement en amont du point de largage des graines ,laquelle amenée d'air crée dans ladite chambre ,une surpression annulant l'effet de cheminée à l'entrée de la tubulure de mise au sol provoquée par la dépression régnant dans les saignées 6 et 7 dans le but d'éviter toute retombée des graines après leur largage ou de poussière en provenance du sol.

Fig.1

Pl.2/3

_Fig.2_

Fig.4

Fig.3     Fig.6

Fig.5

Fig.7

PL. 3/3